# DEMANDE DE BREVET EUROPEEN

(11) **EP 0 904 998 A1**
(43) Date de publication de la demande: **31.03.1999**
(21) Numéro de dépôt: 98115980.9
(22) Date de dépôt: 25.08.1998
(51) Int. Cl.: B60S 1/40

(54) **Essuie-glace, notamment pour véhicule automobile comportant un balai standardisé et balai standardisé apte à être monté sur un bras d'essuie-glace**

(30) Priorité: 29.08.1997 FR 9710876
(71) Demandeur: VALEO SYSTEMES D'ESSUYAGE, 78321 La Verrière (FR)
(72) Inventeur: Jarasson, Jean-Michel, 93130 Noisy le Sec (FR)
(74) Mandataire: Gamonal, Didier

(57) **Abrégé**

L'invention concerne un essuie-glace, notamment pour véhicules automobiles, dont le balai est apte à être monté à l'extrémité libre (18) d'un bras (12) d'essuie-glace au niveau d'une portion d'articulation (28), ladite portion d'articulation (28) comportant deux flancs latéraux parallèles (32) et une première paire de trous (42, 44) alignés aménagés dans chacun des flancs apte à recevoir une vis (43) pour le montage articulé du balai (20) sur le bras (12),caractérisé en ce que la portion d'articulation (28) comporte une seconde paire de trous (44, 42).

## Description

L'invention concerne un essuie-glace de véhicule automobile comportant un balai standardisé.

L'invention concerne plus particulièrement un essuie-glace de véhicule automobile, du type dans lequel un balai d'essuie-glace est articulé, par une portion d'articulation, à une extrémité libre d'un bras d'essuie-glace, et du type dans lequel la portion d'articulation du balai comporte deux flancs latéraux parallèles qui sont réunis par un dos supérieur transversal.

Il existe de nombreux types de conceptions des moyens d'articulation du balai d'essuie-glace à l'extrémité du bras. En effet, certains bras d'essuie-glace présentent une extrémité repliée longitudinalement vers l'arrière pour former un crochet à l'intérieur duquel est reçu un connecteur articulé sur le balai.

Dans d'autres types d'essuie-glace, l'extrémité longitudinale libre du bras est réalisée sous la forme d'une chape, soit venue de matière avec le bras, soit rapportée, qui enserre la portion d'articulation du balai et qui est reliée à celle-ci par une vis qui forme tige d'articulation.

Or, comme on le sait, le balai d'essuie-glace est une pièce d'usure qu'il est nécessaire de changer régulièrement pour conserver une bonne qualité d'essuyage et une bonne visibilité au travers de la vitre.

Bien entendu, l'intégralité de l'essuie-glace n'a pas à être remplacée, seul le balai étant sujet à une usure rapide.

Il est donc de nécessaire de prévoir des balais qui sont destinés à équiper en seconde monte les véhicules et qui doivent donc pouvoir être adaptés au bras d'essuie-glace sur lequel ils sont destinés à être montés.

Jusqu'à présent, il est donc nécessaire de prévoir, outre des balais d'essuie-glace de tailles différentes pour s'adapter à la taille de la vitre du véhicule considéré, des balais d'essuie-glace qui comportent des portions d'articulation différentes pour pouvoir être montés sur un type de bras d'essuie-glace particulier.

Cette grande diversité de balais à concevoir et à produire est particulièrement onéreuse en terme de production, de stockage et de distribution.

Par ailleurs, il est possible que le propriétaire du véhicule qui souhaite remplacer ses balais d'essuie-glace se trompe de modèle de balais, acquérant ainsi des balais qu'il ne pourra pas utiliser.

L'invention vise à résoudre ces différents problèmes.

Pour ce faire, l'invention propose un essuie-glace, notamment pour véhicule automobile, comprenant un balai articulé au niveau d'une portion d'articulation à une extrémité libre d'un bras d'essuie-glace, ladite portion d'articulation comportant deux flancs latéraux parallèles et une première paire de trous alignés aménagés dans chacun des flancs, ladite première paire de trous recevant une vis de fixation articulée du balai sur une chape solidaire de l'extrémité libre du bras, caractérisé en ce que, la portion d'articulation comporte une seconde paire de trous alignés aménagés dans chacun des flancs.

Selon d'autres caractéristiques :
- la portion d'articulation est reçue entre les ailes de la chape.
- la seconde paire de trous est apte à recevoir la vis. L'invention propose également un essuie-glace notamment pour véhicule automobile, comprenant un balai articulé au niveau d'une portion d'articulation à une extrémité libre d'un bras d'essuie-glace par l'intermédiaire d'un connecteur, ladite portion d'articulation comportant deux flancs latéraux parallèles entre lesquels est reçu le connecteur, caractérisé en ce que la portion d'articulation comporte une paire de trous alignés, en ce que le connecteur comporte un perçage et en ce que la paire de trous et le perçage reçoivent une vis pour montage articulé du connecteur sur le balai.
Avantageusement,
- l'extrémité libre du bras forme un crochet dans lequel est reçu le connecteur.
- la portion d'articulation comporte une autre paire de trous.
- l'autre paire de trous est apte à recevoir la vis. L'invention propose enfin un balai d'essuie-glace , notamment pour véhicule automobile, apte à être monté à l'extrémité libre d'un bras d'essuie-glace au niveau d'une portion d'articulation ladite portion d'articulation comportant deux flancs latéraux parallèles et une première paire de trous alignés, aménagés dans chacun des flancs apte à recevoir une vis pour le montage articulé du balai sur le bras, caractérisé en ce que la portion d'articulation comporte une seconde paire de trous.

De façon préférée :
- la seconde paire de trous est apte à recevoir la vis.
- les flancs sont réunis par un dos continu.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté d'un essuie-glace ;
- la figure 2 est une vue en perspective éclatée illustrant le montage d'un balai d'essuie-glace selon l'invention à l'extrémité longitudinale avant libre d'un premier bras d'essuie-glace : et
- la figure 3 est une vue similaire à celle de la figure 2 dans laquelle le balai d'essuie-glace est destiné à être monté sur un deuxième type de bras d'essuie-glace.

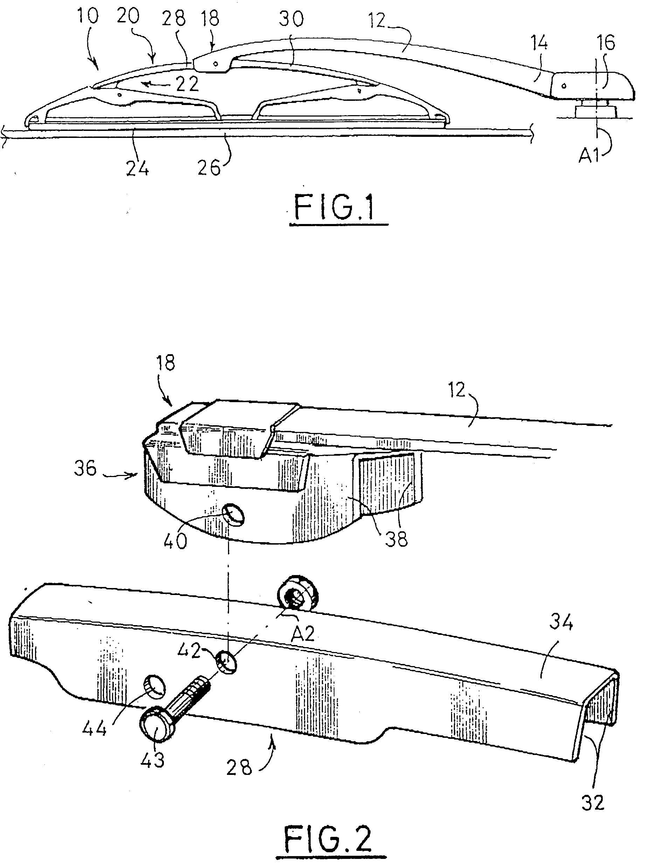

On a représenté sur la figure 1 un essuie-glace 10 de véhicule automobile comportant essentiellement un bras d'essuie-glace 12 qui est lié par une extrémité longitudinale arrière 14 à une tête d'entraînement 16 assurant son entraînement en balayage rotatif alterné autour d'un axe A1. Le bras d'essuie-glace 12 comporte par ailleurs une extrémité longitudinale avant libre 18 sur laquelle est articulé, autour d'un axe transversal, un balai d'essuie-glace 20 dont une structure articulée 22 plaque une raclette d'essuyage 24 contre une vitre à essuyer 26 du véhicule automobile.

De manière connue, le balai 20 est articulé sur le bras 12 par une portion d'articulation 28 agencée sensiblement au centre d'un étrier principal 30 de la structure articulée 22.

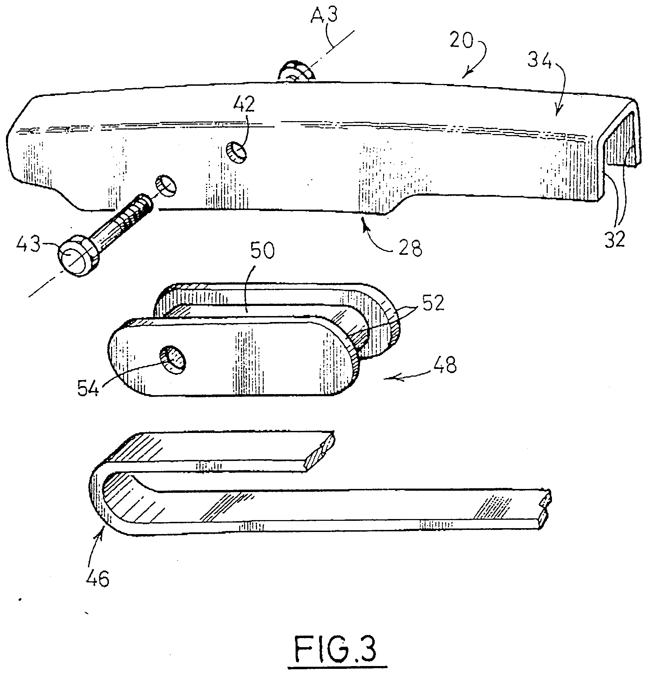

La portion d'articulation 28 du balai 20 selon l'invention est plus particulièrement illustrée sur les figures 2 et 3, ainsi que l'extrémité longitudinale avant libre 18 d'un bras d'essuie-glace, dont deux types sont représentés respectivement sur les figures 2 et 3.

Comme on peut le voir sur les figures 2 et 3, la portion d'articulation 28 du balai 20 comporte deux flancs latéraux longitudinaux 32 qui sont réunis par un dos transversal supérieur 34 qui s'étend sur toute la longueur de la portion d'articulation 28, de façon continue.

Dans le premier mode de réalisation de l'invention illustrée sur la figure 2, l'extrémité libre 18 du bras 12 est réalisée sous la forme d'une chape 36. Ainsi, la chape 36, qui est ici réalisée sous la forme d'une pièce rapportée, comporte deux ailes 38 longitudinales parallèles qui s'étendent vers le bas en direction de la vitre depuis l'extrémité libre 18 du bras 12 et entre lesquelles la portion d'articulation 28 du balai 20 est destinée à être reçue.

Les deux ailes 38 de la chape 36 sont chacune munies d'un orifice 40 qui est destiné à être amené en regard d'un trou 42 formé dans chacun des flancs 32 de la portion d'articulation 28. Lorsque les orifices 40 des ailes 38 et les trous 42 des flancs 32 sont alignés transversalement selon un axe A2, il est possible d'introduire au travers des trous 42 et des orifices 40 une vis de fixation 43 qui assure à la fois la fixation du balai 20 sur le bras 12 et son articulation autour de l'axe transversal A2.

Toutefois, conformément aux enseignements de l'invention, la portion d'articulation 28 du balai comporte une deuxième paire de trous 44 aménagés dans chacun de ses flancs 32.

La deuxième paire de trous 44 est alignée selon un axe transvèrsal A3 qui est décalé longitudinalement vers l'avant et verticalement vers le bas en direction de la vitre par rapport à la première série de trous 42 d'axe A2.

Cette deuxième paire de trous 44, qui n'est pas utilisée pour assurer le montage du balai 20 sur la chape 36, est utilisée pour l'articulation du balai 20 à l'extrémité longitudinale libre 18 d'un bras 12 formant crochet.

Comme on peut le voir plus particulièrement sur la figure 3, le bras 12 présente en effet une extrémité libre 18 qui est formée d'une tige métallique de section transversale sensiblement rectangulaire et qui est recourbée verticalement vers le haut et longitudinalement vers l'arrière pour former un crochet 46.

Un connecteur 48 est destiné à être immobilisé à l'intérieur du crochet 46 et il comporte à cet effet un corps central 50 allongé longitudinalement et deux flasques latéraux 52, qui sont reliés par le corps central 50, et qui encadrent transversalement le crochet 46 de l'extrémité libre 18 du bras 12.

Le connecteur 48 est destiné à être reçu entre les deux flancs latéraux 32 de la portion d'articulation 28 du balai 20. Le connecteur 48 comporte un perçage 54 qui permet, lorsqu'il est aligné selon l'axe A3 de la seconde paire de trous 44, le passage d'une vis d'articulation 43 qui est engagée transversalement au travers des trous 44 et du connecteur 48 pour lier à rotation le balai 20 au bras 12.

Comme on peut le voir sur la figure 3, le fait que le crochet 46 du bras 12 soit recourbé vers le haut permet d'engager celui-ci par en dessous entre les deux flasques 32 de la portion d'articulation 28 qui, de la sorte, n'a pas besoin qu'il soit pratiqué une ouverture dans son dos supérieur 34.

Ce type de montage par vis d'articulation est particulièrement utilisé pour les balais d'essuie-glace destinés à équiper des véhicules poids lourds comportant des surfaces vitrées importantes, et par conséquent des balais d'essuie-glace de fortes dimensions.

Ainsi, grâce à l'invention, le balai d'essuie-glace 20 est susceptible d'être monté indifféremment sur des bras d'essuie-glace 12 dont l'èxtrémité est en forme de chape 36 ou en forme de crochet 46, la première étant destinée à chevaucher le balai à l'extérieur de sa portion d'articulation, et le second à être reçu à l'intérieur de la portion d'articulation 28.

## Revendications

1. Essuie-glace, notamment pour véhicule automobile comprenant un balai (20) articulé au niveau d'une portion d'articulation (28) à une extrémité libre (18) d'un bras d'essuie-glace (12),
ladite portion d'articulation (28) comportant deux flancs latéraux parallèles (32) et une première paire de trous (42) alignés aménagés dans chacun des flancs (32)
ladite première paire de trous (42) recevant une vis (43) de fixation articulée du balai (20) sur une chape (36) solidaire de l'extrémité libre (18) du bras (12),
caractérisé en ce que,
la portion d'articulation (28) comporte une seconde paire de trous (44) alignés aménagés dans chacun des flancs (32).

2. Essuie-glace selon la revendication 1, caractérisé en ce que la portion d'articulation (28) est reçue entre les ailes (38) de la chape (36).

3. Essuie-glace selon l'une des revendications 1 et 2, caractérisé en ce que la seconde paire de trous (44) est apte à recevoir la vis (43).

4. Essuie-glace, notamment pour véhicule automobile, comprenant un balai (20) articulé au niveau d'une portion d'articulation (28)à une extrémité libre (18) d'un bras d'essuie-glace (12) par l'intermédiaire d'un connecteur (48),
ladite portion d'articulation (28) comportant deux flancs latéraux parallèles (32) entre lesquels est reçu le connecteur (48),
caractérisé en ce que,
la portion d'articulation (28) comporte une paire de trous (44) alignés, en ce que le connecteur (48) comporte un perçage (54) et en ce que la paire de trous (44) et le perçage (54) reçoivent une vis (43) pour montage articulé du connecteur (48) sur le balai (20).

5. Essuie-glace selon la revendication 4, caractérisé en ce que l'extrémité libre (18) du bras (12) forme un crochet (46) dans lequel est reçu le connecteur (48).

6. Essuie-glace selon l'une des revendications 4 et 5, caractérisé en ce que la portion d'articulation (28) comporte une autre paire de trous (42).

7. Essuie-glace selon la revendication 6, caractérisé en ce que l'autre paire de trous (42) est apte à recevoir la vis (43).

8. Balai d'essuie-glace, notamment pour véhicule automobile, apte à être monté à l'extrémité libre (18) d'un bras (12) d'essuie-glace au niveau d'une portion d'articulation (28)
ladite portion d'articulation (28) comportant deux flancs latéraux parallèles (32) et une première paire de trous (42, 44) alignés, aménagés dans chacun des flancs apte à recevoir une vis (43) pour le montage articulé du balai (20) sur le bras (12),
caractérisé en ce que
la portion d'articulation (28) comporte une seconde paire de trous (44, 42).

9. Balai selon la revendication 8, caractérisé en ce que la seconde paire de trous (44, 42) est apte à recevoir la vis (43).

10. Balai selon l'une des revendications 8 et 9, caractérisé en ce que les flancs (32) sont réunis par un dos (34) continu.
